# EUROPEAN PATENT SPECIFICATION

(11) **EP 2 435 363 B1**
(45) Date of publication and mention of the grant of the patent: **04.07.2018**
(21) Application number: 10780109.4
(22) Date of filing: 25.05.2010
(51) Int. Cl.: C01B 17/88, C25B 1/22

(54) **METHOD FOR CONCENTRATING DILUTE SULFURIC ACID AND AN APPARATUS FOR CONCENTRATING DILUTE SULFURIC ACID**
VERFAHREN ZUR KONZENTRATION VERDÜNNTER SCHWEFELSÄURE UND VORRICHTUNG ZUR KONZENTRATION VERDÜNNTER SCHWEFELSÄURE
PROCÉDÉ DE CONCENTRATION D'ACIDE SULFURIQUE DILUÉ ET APPAREIL POUR LA CONCENTRATION D'ACIDE SULFURIQUE DILUÉ

(30) Priority: 25.05.2009 FI 20095573
(43) Date of publication of application: 04.04.2012
(73) Proprietor: OUTOTEC (FINLAND) OY, 02230 Espoo (FI)
(72) Inventor: GASIK, Michael, FI-00900 Helsinki (FI); LOKKILUOTO, Anu, FI-00250 Helsinki (FI); PELTOLA, Heljä, FI-28430 Pori (FI); TASKINEN, Pekka, FI-02110 Espoo (FI)
(74) Representative: Boco IP Oy Ab
(86) International application number: PCT/FI2010/050421
(87) International publication number: WO 2010/136649

(56) References cited:
- WO-A1-92/19368
- GB-A- 346 667
- US-A- 2 793 182
- US-A- 4 059 496
- US-A- 4 219 394
- US-A- 4 306 950
- LU P.W.T. ET AL: 'Sulfur dioxide depolarized electrolysis for hydrogen production: Development status' INT. J. HYDROGEN ENERGY vol. 7, no. 7, 1982, pages 563 - 575, XP023644107

## Description

### FIELD OF INVENTION

The invention relates to a method for concentrating dilute sulfuric acid. In particular, the invention relates to a method where at least two electrolytic cells are utilized in the concentration of sulfuric acid.

### BACKGROUND OF THE INVENTION

When sulfuric acid is manufactured industrially, it is generally made of sulfur dioxide, which is obtained for example from the combustion process of sulfur according to the following chemical equation (1):

S(s) + O₂(g) → SO₂(g) (1)

In the metallurgical industry, a large quantity of sulfur dioxide is formed in roasting and smelting processes, i.e. the exhaust gases contain essentially large quantities of sulfur dioxide. Sulfuric acid production plants have been built around metallurgical plants, primarily for environmental reasons, because sulfur dioxide must be removed from exhaust gases. The sulfuric acid produced in these kinds of plants is ingcreasingly used for replacing the conventional acid made of iron sulfide (pyrite).

The major part of concentrated sulfuric acid is produced in the so called contact process. The contact process essentially comprises two separate steps:
- catalytic conversion of SO₂ gas to SO₃, which is called contacting, and
- absorption of SO₃ to a sulfuric acid solution, which is called absorption.

These steps can be repeated several times, and the obtained end product is commercial concentrated sulfuric acid.

In the contacting step, sulfur dioxide obtained from burning sulfur or from some other source is oxidized in the presence of oxygen and a catalyst (for example vanadine(V)oxide) into sulfur trioxide according to the following chemical equation (2), whereafter the sulfur trioxide is absorbed in sulfuric acid.

SO₂(g) + ½ O₂(g) → SO₃(g) (cat. V₂O₅) (2)

Sulfur trioxide reacts with water contained in or added into sulfuric acid according to the following chemical equation (3), so that more sulfuric acid is formed.

SO₃ (g) + H₂O (I) → H₂SO₄ (I) (3)

It is not practically reasonable to add sulfur trioxide (SO₃) directly into water, or into dilute sulfuric acid, because the reaction is extremely exothermal and corrosive sulfuric acid mist is easily formed instead of liquid. Therefore sulfur trioxide is absorbed in 98 wt% (18M) sulfuric acid. This is the azeotropic content, where the partial pressures of sulfur dioxide, sulfuric acid and water vapor are at minimum. Sulfuric acid cannot be concentrated to over 98 wt% by evaporating water, because after the azeotropic point, more sulfuric acid than water is removed from the mixture to the vapor phase.

In many processes of the chemical industry where sulfuric acid is used large quantities of dilute spent acid are formed and they contain varying quantities of different organic and inorganic impurities. One form of impure sulfuric acid is wash acid, which is formed when washing sulfur dioxide containing gas obtained from metallurgical processes prior to conducting said gas to the manufacturing of sulfuric acid.

When desired, spent acid can be regenerated. In the regeneration process, the impurities contained in the spent acid are removed and water is removed from the dilute sulfuric acid until the product corresponds to concentrated sulfuric acid. The regeneration of spent acid can also require that it is decomposed. In that case the impure acid which is concentrated to a suitable content is decomposed thermally. The formed sulfur dioxide gas is washed and it is used for manufacturing sulfuric acid in a contact process.

Depending on the quantity and quality of the impurities contained in the spent acid, several alternative regeneration processes can be applied. In addition, sulfuric acid can be concentrated and decomposed also for other reasons than the impurities contained therein. In that case it is possible to make use of the same methods as with impure acid. Various concentration methods are used depending on the conditions. Below examples of different concentration methods are presented.

A relatively dilute sulfuric acid, 70 to 75%, can be obtained for example by means of vacuum evaporation, Venturi evaporation or immersion burner evaporation. In vacuum evaporation, dilute acid is boiled in a vacuum, so that the acid is concentrated as water evaporates. The most significant feature of Venturi evaporation is that water is evaporated from dilute sulfuric acid at an atmospheric pressure, but at a temperature that is remarkably lower than the acid boiling point. In the Venturi system, the water removed from sulfuric acid solution is transferred to the bypassing gas stream, which carries the water vapor away. Immersion burner evaporation is sometimes used for concentrating sulfuric acid, when the acid contains a lot of salts as impurities. In this method liquid or gaseous fuels as well as a burner are used for developing hot flue gases. These flue gases with a temperature of 1500 to 1600° C are conducted to the acid through an immersed pipe. Water vapor is absorbed in the combustion gas, and adiabatic evaporation cools it down simultaneously.

When concentrating sulfuric acid to the content of 93 to 98%, either direct or indirect heating can be used; the latter is possible both at a normal pressure and at low pressure. In particular, a drum evaporator is used for concentrating spent acids in the explosives industry. The method is similar to immersion burner evaporation used for more dilute acids. Flue gases obtained from burning fuel oil or gas are conducted through an immersion pipe to the acid to be concentrated, which proceeds in countercurrent with respect to the gases, through several containers. Sulfuric acid can be concentrated to 95 to 98% at a normal pressure by applying indirect heating of the flue gases. On top of a Paulig-Plinke type heater a column distiller made of an alloy of iron and silicon is arranged. Sulfuric acid (about 70%) is fed from the top to the column, and it flows downwardly in the pipe, in countercurrent with respect to the fumes. The acid is concentrated to 82 to 85%. The principle can be compared to the evaporation process of a 70 to 75% acid. Owing to the required high temperatures, the energy consumption is high and it is not possible to apply the multiple-effect principle, which would save thermal energy and thus reduce energy consumption. When concentrating sulfuric acid to the content of 93 to 98% fumes that contain remarkable quantities of gaseous sulfuric acid are formed. These fumes cannot be released to the atmosphere without purification, which means that the evaporated sulfuric acid is separated from the water vapor removed from the system by means of a suitable washing system.

The evaporation of sulfuric acid is a troublesome process for several reasons. A drawback in all above described methods is brought about by corrosion problems caused by the heating of sulfuric acid. An extremely corrosive sulfuric acid mist is easily formed in connection with heating. In addition, the use of a vacuum and high temperatures in the concentration process require a lot of energy.

In some thermochemical cycles aiming at the production of hydrogen sulfuric acid is formed as an intermediate product. In these methods, sulfuric acid is decomposed, i.e. the decomposition is part of the cycles and it makes the hydrogen production possible. There are several thermochemical cycles, among which for instance the following four have been widely studied: the hybrid-sulfur cycle, the sulfur-iodine cycle, the Ispra Mark 13 hybrid cycle and the UT-3 cycle.

Sulfur is recycled for example in a cycle developed by the Westinghouse Electric Corporation, which cycle is called the hybrid-sulfur cycle (HyS-process). The hybrid-sulfur cycle is described for instance in the US patent 4412895. The major reactions in the cycle are:

H₂SO₄ → H₂O + SO₂ + ½ O₂ (4)

SO₂ + 2 H₂O → H₂SO₄ + H₂ (5)

Sulfur is recycled also in the sulfur-iodine cycle. This cycle is composed of three reactions, where the net reactant is water, and the net products are hydrogen and oxygen. Sulfur and iodine are recovered and reused.

H₂SO₄ → H₂O + SO₂ + ½ O₂ (6)

I₂ + SO₂ + 2 H₂O → 2 HI + H₂SO₄ (7)

2 HI → I₂ + H₂ (8)

The above described thermochemical cycles are developed mainly for the utilization of nuclear energy and the utilization of SO₂ without recycling and decomposition of sulfuric acid has not been discussed in this connection. Staser *et al.* have described the effect of the passage of water on the production of hydrogen and sulfuric acid in a cell in their article (Staser & Weidner, J. Electrochem. Soc. 156(1) B16-B21, 2009). In the method described in said publication, dry sulfur dioxide gas is fed to the anode side of the cell and the method is discussed only with respect to water control. The publication does not contain any mention of concentrating sulfuric acid in an electrolytic cell.

In the earlier patent publication WO2008087252 by the applicant, a method for manufacturing hydrogen and sulfuric acid has been described. In this overall process the utilization of an electrochemical cell in the production of hydrogen has been suggested as one alternative. The process comprises steps where a sulfur dioxide gas stream is divided into two separate sub-streams, of which the first sub-stream is routed to water splitting and the second sub-stream is routed to oxidation where sulfur dioxide is oxidized into sulfur trioxide. The splitting of water is realized in a partial thermochemical cycle in the production of hydrogen and sulfuric acid, one suggested embodiment being the electrolytic splitting of water in an electrolytic cell. The described method utilizes only one cell for manufacturing hydrogen and sulfuric acid, and the formed sulfuric acid is dilute. The method does not utilize or describe the use of an electrolytic cell for concentrating sulfuric acid; instead for producing commercial strong sulfuric acid, the method uses a conventional evaporation step where water is evaporated and partly concentrated sulfuric acid is thereafter concentrated further in a sulfur trioxide absorption process.

The publication JP 8071365 discloses a method where a redox system is used for sulfur removal of the sulfur oxide present in exhaust gases and for producing sulfuric acid and hydrogen as side products. The exhaust gas is contacted with a sulfur dioxide absorbing solution, which contains iodine dissolved in water. The solution forms two layers, where the lighter phase contains sulfuric acid and the heavy phase contains hydrogen iodide. The hydrogen iodide is electrolyzed for producing hydrogen and iodine. The separated iodine is reused for absorbing sulfur dioxide gas. The method is a modification of the sulfur-iodine process without the decomposition of sulfuric acid. This method produces hydrogen and sulfuric acid. However, 5 moles water are present along with each sulfuric acid mole in the light phase, which means that the acid is a dilute acid which is not a commercial product. The patent does not specify how the concentration of acid is carried out.

### BRIEF DESCRIPTION OF THE INVENTION

Thus the object of the invention is to provide a method, by means of which the above described problems can be solved or at least essentially reduced. In particular, the object of the invention is to provide a method for concentrating dilute sulfuric acid without a concentration step carried out at high temperature or in vacuum. The objects of the invention are achieved by a method which is characterized by what is set forth in the independent claim. Preferred embodiments of the invention are described in the dependent claims.

Thus the invention relates to a method for concentrating dilute sulfuric acid. In a method according to the invention, the concentration of sulfuric acid is carried out by means of at least two electrolytic cells, which are depolarized by sulfur dioxide, and wherein a cation conductive membrane, that is a functionally fixed electrolyte, is used for separating the cathode and anode sides in the electrolytic cells. The invention is based on the observation that the electro-osmotic water-drag effect occurring in the cation conductive membrane of the cell can be utilized in the concentration of sulfuric acid. The water-drag effect means that typically 1-4 water molecules are transferred along with one proton (H⁺) from the anode side of the cell to the hydrogen-producing cathode side.

In addition to the method, also an apparatus for concentrating dilute sulfuric acid is disclosed, said apparatus comprising at least a first electrolytic cell (1) and a second electrolytic cell (2). Thus the apparatus is provided with a first electrolytic cell (1) for receiving dilute sulfuric acid, and for producing concentrated sulfuric acid. Moreover, the apparatus is provided with at least a second electrolytic cell (2) for receiving the sulfuric acid concentrated in the first electrolytic cell (1) from the first electrolytic cell (1), and for further concentrating the sulfuric acid concentrated in the first electrolytic cell (1).

### BRIEF DESCRIPTION OF DRAWINGS

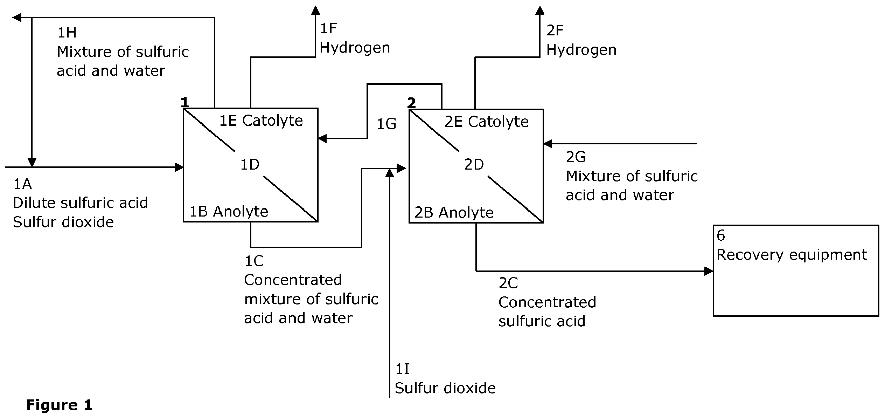

The invention is described in more detail below, with reference to the appended drawings, where
Figure 1 is a flowchart illustrating an apparatus suitable for the method, said apparatus comprising two electrolytic cells,

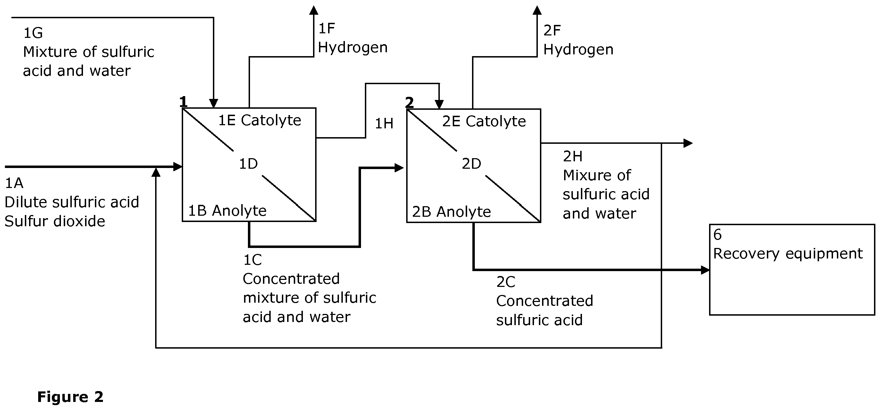

Figure 2 is a flowchart illustrating an apparatus suitable for the method, said apparatus comprising two electrolytic cells,

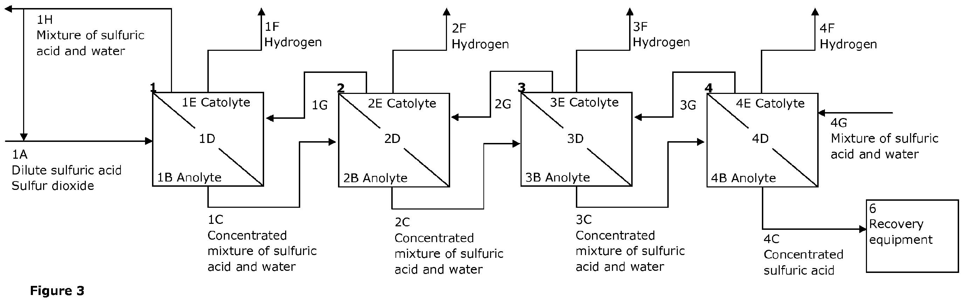

Figure 3 is a flowchart illustrating an apparatus suitable for the method, said apparatus comprising four electrolytic cells,

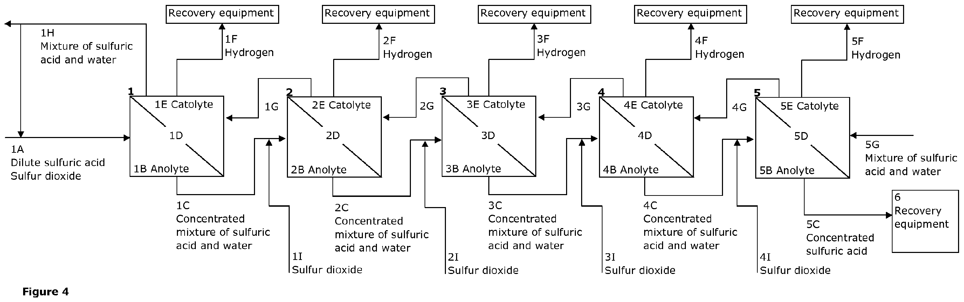

Figure 4 is a flowchart illustrating an apparatus suitable for the method, said apparatus comprising five electrolytic cells,

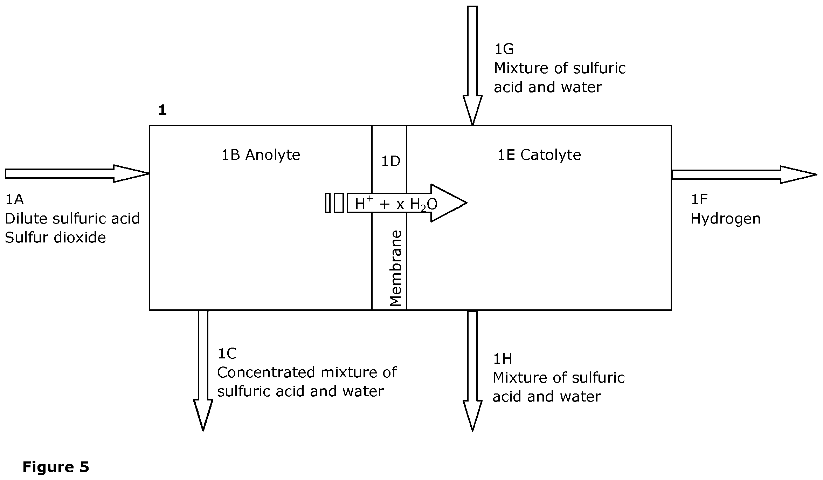

Figure 5 is a diagram illustrating an electrolytic cell suitable for the method, and

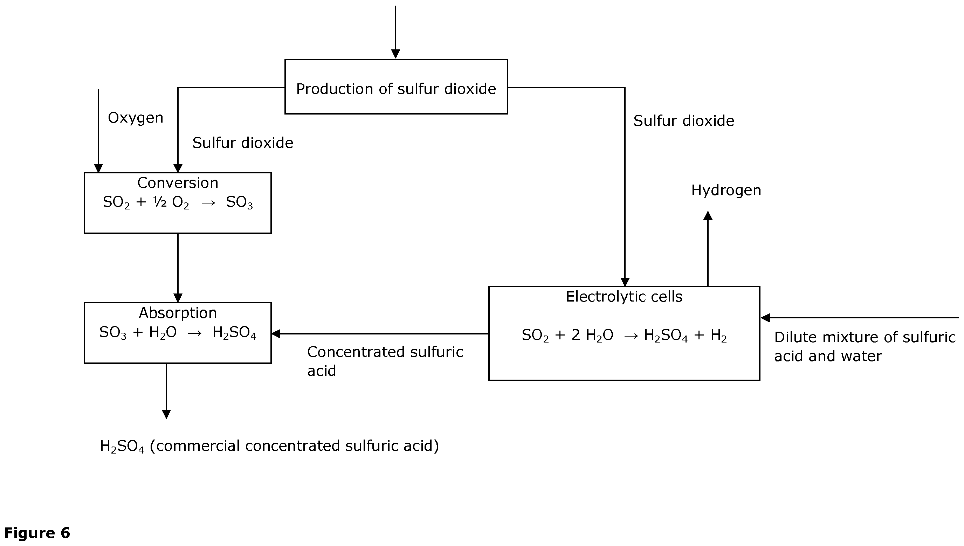

Figure 6 is a diagram illustrating a process concept applying a method according to the invention.

### DETAILED DESCRIPTION OF THE INVENTION

The present invention relates to a method for concentrating dilute sulfuric acid, where the concentration of sulfuric acid is carried out by means of at least two electrolytic cells, which are depolarized by sulfur dioxide, and wherein a cation conductive membrane, that is a functionally fixed electrolyte, is used for separating the cathode and anode sides in the electrolytic cells. In one embodiment of the invention, the concentration of sulfuric acid is carried out by means of at least three electrolytic cells. The invention also comprises embodiments where the concentration of sulfuric acid is carried out by means of at least four or at least five electrolytic cells.

In the invention, the electrolytic cells are cells depolarized by sulfur dioxide. In a preferred embodiment of the invention, the concentration of sulfuric acid is carried out by means of electrolytic cells that are installed in a cascading fashion and depolarized by sulfur dioxide, in which case in the cascade, there are installed in succession 2 to 11 electrolytic cells, advantageously 2 to 5 electrolytic cells.

In the present application, the term 'dilute sulfuric acid' refers to a mixture of water and sulfuric acid, where the sulfuric acid content is 78 wt% or less than 78 wt%. The notion 'relatively dilute sulfuric acid' is also included in the definition of dilute sulfuric acid. Concentrated sulfuric acid refers to a mixture of water and sulfuric acid, where the sulfuric acid content is more than 78 wt%. The term 'commercial strong sulfuric acid' refers to sulfuric acid with a content of over 98 wt%.

Dilute sulfuric acid and sulfur dioxide are fed to the anode side of the first electrolytic cell and the following reaction takes place on the anode side:

SO₂(aq) + 2(1+x) H₂O → H₂SO₄(aq) + 2 (H₂O)ₓH⁺(aq) + 2 e⁻ (9)

where x = 1 to 4.

The hydrogen ion (proton) H⁺ does not remain as such in water surroundings, instead water molecules gather around it, so that complex ions such as (H₂O)ₓH⁺(aq), where x = 1 to 4, are formed. The formed complex ions pass through the membrane of the electrolytic cell to the cathode side, and the following reaction takes place at the cathode:

2 (H₂O)ₓH⁺(aq) + 2 e⁻ → H₂(g) + 2x H₂O (10)

where x = 1 to 4.

For example in one embodiment of the invention, each hydrogen ion carries along three water molecules (x = 3) according to the following chemical equation:

SO₂(aq) + 8 H2O → H₂SO₄(aq) + 2 (H₂O)₃H⁺(aq) + 2 e⁻

The complex ions according to the example pass through the membrane of the electrolytic cell to the cathode side and the following reaction takes place at the cathode:

2 (H₂O)₃H⁺(aq) + 2 e⁻ → H2(g) + 6 H2O

The concentrated mixture of sulfuric acid and water obtained from the anode side of the first electrolytic cell is fed together with non-reacted and/or added sulfur dioxide to the anode side of the second electrolytic cell, whereafter the described reactions (9) and (10) take place in the second electrolytic cell. The further concentrated sulfuric acid formed as a reaction product from the anode side of the electrolytic cell is recovered or it is fed to the anode side of the following electrolytic cell.

The used cation conductive membrane separating the cathode and anode sides in the electrolytic cell is a functionally fixed electrolyte. The membrane serves as an insulator, particularly as an electric insulator and as a proton conductor, and prevents the gases from flowing from one side of the membrane to the other. In a preferred embodiment of the invention, the employed membrane comprises a sulfonic acid membrane, such as a membrane of the trademark Nafion®.

In one embodiment of the invention, the concentration of the sulfuric acid to be fed to the anode side of the first electrolytic cell is 78 wt% or under 78 wt%, and preferably 1 to 25 wt%. In one embodiment of the invention, the concentration of the sulfuric acid to be fed to the cathode side of the first electrolytic cell is 78 wt% or under 78 wt%, and preferably 1 to 35 wt%.

In one embodiment of the invention, sulfuric acid is concentrated at a temperature of 10 to 120°C, preferably at a temperature of 20 to 100°C, for example at a temperature of 30°C, 40°C, 50°C, 60°C, 70°C, 80°C or 90°C, in which case the temperature fluctuation can be ±5°C. In an embodiment, sulfuric acid is concentrated at a absolute pressure of 0.5 to 7 bar, for example at 1 bar, 2 bar, 3 bar, 4 bar, 5 bar or at a pressure of 6 bar, in which case the pressure fluctuation can be ±0,5 bar; advantageously sulfuric acid is concentrated at a pressure of 1 to 5 bar, and preferably at a pressure of 1 to 3 bar.

In a preferred embodiment of the invention, concentrated sulfuric acid is recovered and lead to a sulfuric acid plant.

Apart from the method, also an apparatus for concentrating dilute sulfuric acid is disclosed, said apparatus comprising at least a first electrolytic cell (1) and a second electrolytic cell (2). Thus the apparatus is provided with a first electrolytic cell (1) for receiving dilute sulfuric acid and for producing concentrated sulfuric acid. Moreover, the apparatus also comprises at least a second electrolytic cell (2) for receiving sulfuric acid concentrated in the first electrolytic cell (1) from the first electrolytic cell (1), and for further concentrating the sulfuric acid concentrated in the first electrolytic cell (1).

In a preferred embodiment, the first electrolytic cell (1) and/or the second electrolytic cell (2) comprises an electrolytic cell depolarized by sulfur dioxide. In an embodiment, the apparatus comprises a total of 2 to 5 electrolytic cells that are installed in a cascading fashion and depolarized by sulfur dioxide.

In a preferred embodiment, the first electrolytic cell (1) comprises an anode side (1B) and a cathode side (1E), and the second electrolytic cell (2) comprises an anode side (2B) and a cathode side (2E). In addition, the apparatus comprises a first set of feed elements (1A) for feeding dilute sulfuric acid and sulfur dioxide to the anode side (1B) of the first electrolytic cell (1) comprising the membrane (1D), in order to generate the following reaction on the anode side (1B):

SO₂(aq) + 2(1+x) H₂O → H₂SO₄(aq) + 2 (H₂O)ₓH⁺(aq) + 2 e⁻ (9)

where x = 1 to 4,

in which case the formed complex ions pass through the membrane (1D) of the electrolytic cell to the cathode side (1E), and the following reaction takes place at the cathode:

2 (H₂O)ₓH⁺(aq) + 2 e⁻ → H₂(g) + 2x H₂O (10)

where x = 1 to 4.

The apparatus further comprises a second set of feed elements (1C) for feeding the concentrated mixture of sulfuric acid and water obtained from the anode side (1B) of the first electrolytic cell (1), together with non-reacted and/or added sulfur dioxide, to the anode side (2B) of the second electrolytic cell (2). The above described reactions (9) and (10) are arranged to take place also in the second electrolytic cell (2). The apparatus further comprises a third set of feed elements (2C) for feeding the further concentrated sulfuric acid, formed as a reaction product from the anode side of the second electrolytic cell (2) to the recovery means (6) or further to the anode side of the third electrolytic cell (3) belonging to the concentration apparatus.

In a preferred embodiment, the membrane (1D) in the first electrolytic cell (1) and/or the membrane (2D) in the second electrolytic cell (2) is a cation conductive functionally fixed electrolyte separating the anode side (1B/2B) and the cathode side (1E/2E). It is arranged to serve as an insulator, particularly as an electric insulator and as a proton conductor, and to prevent the gases from flowing from one side of the membrane to the other. In a preferred embodiment the membrane comprises a sulfonic acid membrane, such as a membrane of the trademark Nafion®.

In a preferred embodiment, the apparatus comprises means (1I) for adding sulfur dioxide to the concentrated mixture of sulfuric acid and water obtained from the anode side (1B) of the first electrolytic cell (1), which mixture is fed together with non-reacted and/or added sulfur dioxide to the anode side (2B) of the second electrolytic cell (2).

In a preferred embodiment, the apparatus comprises means for removing hydrogen from the cathode side of the electrolytic cells, as well as means for the recovery of hydrogen. Moreover, the concentration apparatus can include means for recycling catholyte from the cathode side of one electrolytic cell to the cathode side of the second electrolytic cell, and/or means for recycling the catholyte of the last electrolytic cell to the anode side of the first electrolytic cell. The catholyte can be recycled both concurrently and countercurrently with respect to the anode side stream, and advantageously the catholyte is recycled countercurrently. The apparatus can comprise for instance three electrolytic cells, which are numbered in the order cell 1, cell 2 and cell 3, in which case the stream on the anode side flows from the cell 1 to the cell 2 and further to the cell 3. In case the catholyte is recycled countercurrently, the catholyte circulates on the cathode side from the cell 3 to the cell 2 and further to the cell 1. According to one embodiment, no catholyte at all is added; instead the cathode distributor remains moist by means of the water flowing through the membranes.

In one embodiment, the apparatus is arranged to function at a temperature of 10 to 120°C, preferably at a temperature of 20 to 100°C, for instance at a temperature of 30°C, 40°C, 50°C, 60°C, 70°C, 80°C or 90°C, in which case the temperature fluctuation can be ±5 °C. In an embodiment, the apparatus is arranged to function at a absolute pressure of 0.5 to 7 bar, for instance at a pressure of 1 bar, 2 bar, 3 bar, 4 bar, 5 bar or 6 bar, in which case the pressure fluctuation can be ±0,5 bar. Preferably, the apparatus is arranged to function at a pressure of 1 to 5 bar, and more preferably at a pressure of 1 to 3 bar. In one embodiment, one or several electrolytic cells function in mutually different temperature and/or pressure circumstances. Also the anode side and the cathode side can function in mutually different temperature and/or pressure circumstances according to an embodiment of the invention, and preferably the pressure on the anode side is higher than the pressure on the cathode side of the same cell. The pressure difference between the anode and cathode sides can be even 2 to 6 bar.

In one embodiment of the invention, sulfur dioxide gas is used for simultaneously producing hydrogen and concentrated sulfuric acid (roughly 98 wt%) by dividing the sulfur dioxide gas stream into two sub-streams. The first sub-stream of the divided sulfur dioxide gas stream is conducted to the production of hydrogen and sulfuric acid, and the second sub-stream is conducted to the production of sulfur trioxide, which sulfur trioxide is used for concentrating sulfuric acid to a commercial strong sulfuric acid.

## Claims

1. A method for concentrating dilute sulfuric acid, **characterized in that** the concentration of sulfuric acid is carried out by means of at least two electrolytic cells which are depolarized by sulfur dioxide, and wherein a cation conductive membrane, that is a functionally fixed electrolyte, is used for separating the cathode and anode sides in the electrolytic cells.

2. The method according to claim 1, **characterized in that** the concentration of sulfuric acid is carried out by means of electrolytic cells that are installed in a cascading fashion and depolarized by sulfur dioxide, so that 2 to 5 electrolytic cells are installed in succession in the cascade.

3. The method according to claim 1 or 2, **characterized in that** dilute sulfuric acid and sulfur dioxide are fed to the anode side of a first electrolytic cell comprising a membrane, so that the following reaction takes place on the anode side:
SO₂(aq) + 2(1+x) H₂O → H₂SO₄(aq) + 2 (H₂O)ₓH⁺(aq) + 2 e⁻ (9)
where x = 1 to 4,
in which case the formed complex ions pass through the membrane of the electrolytic cell to the cathode side, and the following reaction takes place at the cathode:
2 (H₂O)ₓH⁺(aq) + 2 e⁻ → H₂(g) + 2x H₂O (10)
where x = 1 to 4,
and the concentrated mixture of sulfuric acid and water obtained from the anode side of the first electrolytic cell is fed to the anode side of the second electrolytic cell together with the non-reacted and/or added sulfur dioxide, and the above described reactions take place in said second electrolytic cell, and the further concentrated sulfuric acid formed as a reaction product from the anode side of the electrolytic cell is recovered or fed to the anode side of the successive electrolytic cell.

4. The method according to any of the preceding claims, **characterized in that** the cation conductive membrane used for separating the cathode and anode in the electrolytic cell sides is a functionally fixed electrolyte that serves both as an insulator and a proton conductor, and prevents the gases from flowing from one side of the membrane to the other.

5. The method according to claim 4, **characterized in that** the employed membrane comprises a sulfonic acid membrane, for instance a Nafion® membrane.

6. The method according to any of the preceding claims, **characterized in that** the concentration of the sulfuric acid to be fed to the anode side of the first electrolytic cell is 78 wt% or less than 78 wt%, preferably 1 to 25 wt%.

7. The method according to any of the preceding claims, **characterized in that** the concentration of the sulfuric acid to be fed to the cathode side of the first electrolytic cell is 78 wt% or less than 78 wt%, preferably 1 to 35 wt%.

8. The method according to any of the preceding claims, **characterized in that** the sulfuric acid is concentrated at a temperature of 10 to 120°C, preferably at a temperature of 20 to 100°C.

9. The method according to any of the preceding claims, **characterized in that** the sulfuric acid is concentrated at a pressure of 0.5 to 7 bar, preferably at a pressure of 1 to 5 bar.

10. The method according to any of the preceding claims, **characterized in that** the concentrated sulfuric acid is recovered and lead to a sulfuric acid plant.

## Patentansprüche

1. Verfahren zum Konzentrieren von verdünnter Schwefelsäure, **dadurch gekennzeichnet, dass** das Konzentrieren von Schwefelsäure mittels mindestens zwei Elektrolysezellen durchgeführt wird, die durch Schwefeldioxid depolarisiert werden, und wobei eine kationenleitende Membran, die ein funktional festes Elektrolyt ist, zur Trennung der Kathoden- und Anodenseite in den Elektrolytzellen verwendet wird.

2. Verfahren nach Anspruch 1, **dadurch gekennzeichnet, dass** das Konzentrieren von Schwefelsäure mittels Elektrolysezellen durchgeführt wird, die nach Art einer Kaskade installiert sind und durch Schwefeldioxid depolarisiert werden, so dass 2 bis 5 Elektrolysezellen hintereinander in der Kaskade installiert sind.

3. Verfahren nach Anspruch 1 oder 2, **dadurch gekennzeichnet, dass** verdünnte Schwefelsäure und Schwefeldioxid zur Anodenseite einer ersten Elektrolysezelle, die eine Membran umfasst, geführt werden, so dass auf der Anodenseite die folgende Reaktion abläuft:
SO₂(aq) + 2(1+x) H₂O → H₂SO₄(aq) + 2 (H₂O)ₓH⁺(aq) + 2 e⁻ (9)
wobei x = 1 bis 4,
in welchem Fall die gebildeten Komplexionen durch die Membran der Elektrolysezelle zur Kathodenseite gelangen und die folgende Reaktion an der Kathode abläuft:
2 (H₂O)ₓH⁺(aq) + 2 e⁻ → H₂(g) + 2x H₂O (10)
wobei x = 1 bis 4,
und das an der Anodenseite der ersten Elektrolysezelle gewonnene konzentrierte Gemisch von Schwefelsäure und Wasser gemeinsam mit dem nicht reagierten und/oder zugegebenen Schwefeldioxid zur Anodenseite der zweiten Elektrolysezelle geführt wird und die oben beschriebenen Reaktionen in der zweiten Elektrolysezelle ablaufen und die als Reaktionsprodukt an der Anodenseite der Elektrolysezelle gebildete weitere konzentrierte Schwefelsäure rückgewonnen oder zur Anodenseite der nachfolgenden Elektrolysezelle geführt wird.

4. Verfahren nach einem der vorhergehenden Ansprüche, **dadurch gekennzeichnet, dass** die zur Trennung der Kathoden- und Anodenseite in der Elektrolysezelle verwendete kationenleitende Membran ein funktional festes Elektrolyt ist, das sowohl als Isolator als auch als Protonenleiter dient, und verhindert, dass die Gase von der einen Seite der Membran zur anderen strömen.

5. Verfahren nach Anspruch 4, **dadurch gekennzeichnet, dass** die verwendete Membran eine Sulfonsäuremembran, zum Beispiel eine Nafion®-Membran, umfasst.

6. Verfahren nach einem der vorhergehenden Ansprüche, **dadurch gekennzeichnet, dass** die Konzentration der zur Anodenseite der ersten Elektrolysezelle zu führenden Schwefelsäure 78 Gew.-% oder weniger als 78 Gew.-%, bevorzugt 1 bis 25 Gew.-%, beträgt.

7. Verfahren nach einem der vorhergehenden Ansprüche, **dadurch gekennzeichnet, dass** die Konzentration der zur Kathodenseite der ersten Elektrolysezelle zu führenden Schwefelsäure 78 Gew.-% oder weniger als 78 Gew.-%, bevorzugt 1 bis 35 Gew.-% beträgt.

8. Verfahren nach einem der vorhergehenden Ansprüche, **dadurch gekennzeichnet, dass** die Schwefelsäure bei einer Temperatur von 10 bis 120 °C, bevorzugt bei einer Temperatur von 20 bis 100 °C, konzentriert wird.

9. Verfahren nach einem der vorhergehenden Ansprüche, **dadurch gekennzeichnet, dass** die Schwefelsäure bei einem Druck von 0,5 bis 7 bar, bevorzugt bei einem Druck von 1 bis 5 bar, konzentriert wird.

10. Verfahren nach einem der vorhergehenden Ansprüche, **dadurch gekennzeichnet, dass** die konzentrierte Schwefelsäure rückgewonnen und zu einer Schwefelsäureanlage geführt wird.

## Revendications

1. Procédé de concentration d'acide sulfurique dilué, **caractérisé en ce que** la concentration d'acide sulfurique est réalisée au moyen d'au moins deux cellules électrolytiques qui sont dépolarisées par le dioxyde de soufre, et dans lequel une membrane conductrice de cations, qui est un électrolyte fonctionnellement fixe, est utilisée pour séparer les côtés cathodique et anodique dans les cellules électrolytiques.

2. Procédé selon la revendication 1, **caractérisé en ce que** la concentration d'acide sulfurique est réalisée au moyen de cellules électrolytiques qui sont installées en cascade et dépolarisées par le dioxyde de soufre de sorte que 2 à 5 cellules électrolytiques soient installées successivement dans la cascade.

3. Procédé selon la revendication 1 ou 2, **caractérisé en ce que** l'acide sulfurique dilué et le dioxyde de soufre sont amenés vers le côté anodique d'une première cellule électrolytique comprenant une membrane, de sorte que la réaction suivante se produise du côté anodique:
SO₂(aq) + 2(1+x) H₂O → H₂SO₄(aq) + 2 (H₂O)ₓH⁺(aq) + 2 e⁻ (9)
où x = 1 à 4,
auquel cas les ions complexes formés passent à travers la membrane de la cellule électrolytique vers le côté cathodique et la réaction suivante se produit à la cathode:
2 (H₂O)ₓH⁺(aq) + 2 e⁻ → H₂(g) + 2x H₂O (10)
où x = 1 à 4,
et le mélange concentré d'acide sulfurique et d'eau obtenu du côté anodique de la première cellule électrolytique est amené vers le côté anodique de la deuxième cellule électrolytique ensemble avec le dioxyde de soufre non réagi et/ou ajouté, et les réactions susvisées se produisent dans ladite deuxième cellule électrolytique, et l'autre acide sulfurique concentré formé du côté anodique de la cellule électrolytique en tant que produit réactionnel est récupéré ou amené vers le côté anodique de la cellule électrolytique successive.

4. Procédé selon l'une des revendications précédentes, **caractérisé en ce que** la membrane conductrice de cations utilisée pour la séparation des côtés cathodique et anodique dans la cellule électrolytique est un électrolyte fonctionnellement fixe qui sert à la fois d'isolateur et de conducteur de protons, et empêche les gaz de couler d'un côté à l'autre de la membrane.

5. Procédé selon la revendication 4, **caractérisé en ce que** la membrane employée comprend une membrane à base d'acide sulfonique, par exemple une membrane Nafion®.

6. Procédé selon l'une des revendications précédentes, **caractérisé en ce que** la concentration de l'acide sulfurique à amener vers le côté anodique de la première cellule électrolytique est de 78 % en poids ou inférieure à 78 % en poids, préférablement de 1 à 25 % en poids.

7. Procédé selon l'une des revendications précédentes, **caractérisé en ce que** la concentration de l'acide sulfurique à amener vers le côté cathodique de la première cellule électrolytique est de 78 % en poids ou inférieure à 78 % en poids, préférablement de 1 à 35 % en poids.

8. Procédé selon l'une des revendications précédentes, **caractérisé en ce que** l'acide sulfurique est concentré par une température de 10 à 120 °C, préférablement par une température de 20 à 100 °C.

9. Procédé selon l'une des revendications précédentes, **caractérisé en ce que** l'acide sulfurique est concentré sous une pression de 0,5 à 7 bar, préférablement sous une pression de 1 à 5 bar.

10. Procédé selon l'une des revendications précédentes, **caractérisé en ce que** l'acide sulfurique concentré est récupéré et acheminé vers une installation d'acide sulfurique.
